# FASCICULE DE BREVET EUROPEEN

(11) **EP 1 681 789 B1**
(45) Date de publication et mention de la délivrance du brevet: **13.04.2011**
(21) Numéro de dépôt: 06290027.9
(22) Date de dépôt: 04.01.2006
(51) Int. Cl.: H04H 20/08

(54) **Système et procédé de réception d'un flux numérique**
System und Verfahren zum Empfangen eines digitalen Stroms
System and method for the reception of a digital stream

(30) Priorité: 12.01.2005 FR 0500326
(43) Date de publication de la demande: 19.07.2006
(73) Titulaire: SAGEM MOBILES, 75015 Paris (FR)
(72) Inventeur: Pecqueur, Rémi, 92800 Puteaux (FR)
(74) Mandataire: Maillet, Alain

(56) Documents cités:
- EP-A- 1 494 375
- WO-A-01/17255
- WO-A-99/67904
- WO-A-03/003686
- WO-A-03/045064
- WO-A-2004/080067
- GB-A- 2 399 986

## Description

La présente invention concerne un procédé de réception d'un programme d'un flux de programmes, un système mettant en oeuvre ledit procédé, un terminal de réception et un terminal de visualisation.

L'augmentation récente des demandes pour l'accès à la télévision numérique a amené la communauté scientifique à développer un système de diffusion hertzienne de télévision numérique: le système dit DVB-T (Digital Video Broadcasting terrestrial: télévision numérique terrestre). Le système DVB-T, défini par les standards ETSI EN 301 744 « Transmission and Multiplexing », ETSI EN 301 468 Specification for Service Information (SI) in DVB systems ETSI EN 301 192 « DVB specification for data broadcasting », est une technologie qui consiste à transmettre des flux de données numériques, telles que des données audio visuelles de type télévision qui peuvent être associées à des données numériques interactives du même type que celui qui est transmis par un satellite mais via les réseaux analogiques existants à antennes et à postes de télévision analogiques classiques. Par la suite, ce type de flux sera appelé flux de programmes en considérant qu'un programme est un ensemble de données audio visuelles et, éventuellement de données interactives qui peuvent être associées à ces données audio visuelles.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières d'accéder à ce type de flux de programmes. Cette adaptation a donné lieu au système normalisé dit DVB-H (Digital Video Broadcast-Handheld) défini par le standard ETSI EN 302 304 qui a été spécifié par l'organisation DVB pour permettre la diffusion de flux de programmes sur des terminaux mobiles qui, comme les téléphones mobiles, doivent répondre à des exigences spécifiques en termes de consommation de courant, de taille d'écran et de mobilité. De plus, le système DVB-H peut être couplé outre ses canaux descendants (downlink) avec une voie de retour montant de type GSM, GPRS ou UMTS (uplink) qui peut être utilisée pour des services intéractifs. Selon le système DVB-H, les programmes d'un flux de programmes sont codés et multiplexés sur la base de la technologie MPEG-2 système de manière à pouvoir transmettre plusieurs programmes à partir d'un même flux. Un tel système permet donc de recevoir un flux de programmes relatif, par exemple à un ensemble de programmes de télévision sur un terminal mobile tel que par exemple un téléphone mobile. Les données audio-visuelles de chacun des programmes contenues dans un flux de programmes sont accessibles par un utilisateur à partir d'une information de définition contenue dans le flux lui-même.

La réception d'un flux de programmes sur un terminal mobile est un service plébiscité par les utilisateurs. De cette manière, l'utilisateur peut accéder à ses programmes favoris quel que soit l'endroit où il se trouve. Cependant, les écrans des terminaux mobiles, de part leur taille réduite, ne sont pas adaptés pour visualiser des programmes de télévision.

Une solution à ce problème consiste à utiliser deux terminaux mobiles : le premier qui sert à la réception d'un flux de programmes (il est alors dit terminal mobile de réception) et le second, disposant d'un écran de plus grandes dimensions, qui sert à la visualisation d'un programme de ce flux de programmes (il est dit terminal mobile de visualisation). Cette solution implique de transmettre le flux de programmes du terminal mobile de réception vers le terminal mobile de visualisation. Cependant, en pratique, cette transmission n'est pas réalisable par un téléphone mobile (terminal mobile de réception) car le débit du flux de programmes à transmettre est de l'ordre de 20 à 30 Mbits/s, ce qui demande à ce téléphone mobile des ressources importantes en énergie, ressources qu'il ne peut fournir sur une relativement longue période de quelques heures.

Le but de l'invention est de proposer un procédé de réception d'un programme issu d'un flux de programmes qui permette de résoudre ce problème du débit important entre un terminal de réception et un terminal de visualisation entraînant une consommation excessive d'énergie du terminal de réception.

Pour ce faire, la présente invention concerne un procédé de réception d'un programme d'un flux numérique contenant un ou plusieurs programmes de télévision selon la revendication 1.

Selon un mode de réalisation de la présente invention, le procédé consiste, après extraction de la ou des informations de définition du ou des programmes de télévision, à transmettre la ou lesdites informations de définition audit terminal de visualisation, à effectuer ladite étape de sélection au niveau dudit terminal de visualisation et à transmettre audit terminal de réception, ladite information de définition sélectionnée.

Selon un mode de réalisation de la présente invention, ledit flux est défini selon le standard DVB.

La demande de brevet européen EP1,494,375 A2 décrit la réception d'un programme d'un flux numérique contenant un ou plusieurs programmes de télévision, ledit flux étant reçu par un terminal de réception mobile et de visualisation d'un programme dudit flux au moyen d'un terminal de visualisation, ledit procédé consistant à recevoir, côté terminal de réception, ledit flux de programme, extraire la ou les informations de définition du ou desdits programmes de télévision reçus et contenus dans ledit flux, extraire un programme défini à partir d'une information de définition sélectionnée, et transmettre, audit terminal de visualisation à partir dudit terminal de réception ledit programme défini pour visualisation par ledit terminal de visualisation. On peut noter que les données et informations de définition extraites du flux de programmes sont mémorisées par le terminal de réception avant d'être émises à destination du terminal de visualisation.

La demande internationale WO 01/17255 décrit qu'un terminal multimédia équipé de moyens de réception et de visualisation de flux DVB-T peut être rendu interactif en l'équipant de moyens adaptés pour communiquer avec un terminal mobile. Le terminal mobile joue alors le rôle d'intermédiaire avec le fournisseur de flux DVB-T ou de router IP pour l'accès à d'autres services. On peut noter que le terminal multimédia transmet au terminal mobile le programme sélectionné une fois que celui-ci a été reçu et mémorisé.

L'un des buts de la présente invention est d'optimiser la transmission d'un programme sélectionné par un utilisateur entre un terminal de réception et un terminal de visualisation.

A cet effet, le programme défini à partir de l'information de définition sélectionnée est extrait et transmis au terminal de visualisation sans que ce programme ne soit mémorisé par le terminal de réception.

La présente invention concerne également un système de réception d'un programme d'un flux numérique contenant un ou plusieurs programmes de télévision, selon la revendication 4.

La présente invention concerne également un terminal de réception d'un programme d'un flux numérique contenant un ou plusieurs programmes de télévision, selon la revendication 6.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma du dispositif de réception d'un programme selon la présente invention.
La Fig. 2 est un schéma du terminal de réception du dispositif de réception selon la présente invention.
La Fig. 3 est un schéma du terminal de visualisation du dispositif de réception selon la présente invention.
La Fig. 4 est un diagramme représentant les étapes successives du procédé de réception selon l'invention.

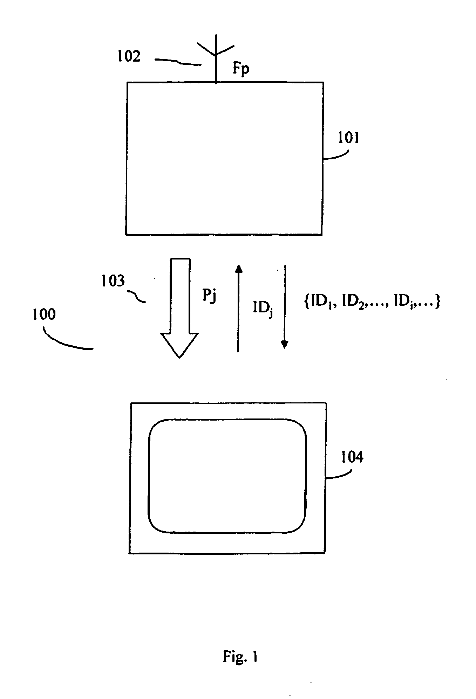

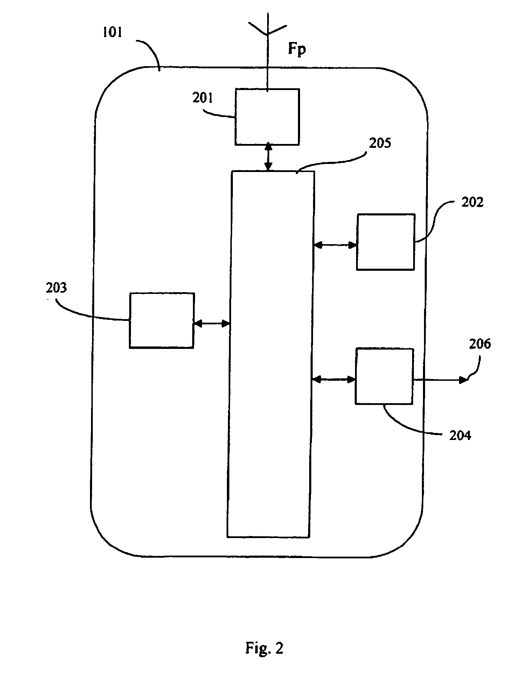

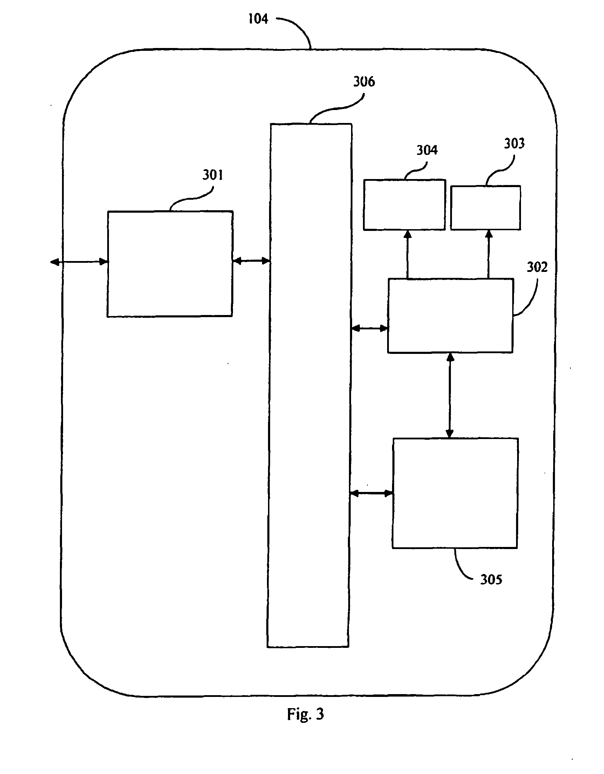

Le système de réception 100 d'un programme selon la présente invention, représenté à la Fig. 1, comporte un terminal mobile 101, dit de réception, dont l'architecture est représentée à la Fig. 2. Ce terminal 101 reçoit un flux Fp d'au moins un programme Pi (i = 1 à n, n entier ≥ 1), par exemple du type DVB-H, au travers d'un canal 102, par exemple un canal radio. Le système de réception 100 comporte également un terminal mobile 104, dit de visualisation, dont l'architecture est représentée à la Fig. 3. Ce terminal 104 et le terminal 101 communiquent entre eux via un bus 103, tel qu'un bus série du type USB (Universal Serial Bus: Bus série universel) par exemple USB 2.0, ou une communication sans fil, par exemple du type conforme au standard 802.11. Plus précisément, le terminal 101 envoie également au terminal 104 la ou toutes les informations de définition IDi du ou des programmes Pi contenus dans le flux de programmes Fp et le terminal 104 répond au terminal 101 par la transmission d'une information de définition IDj parmi la ou les informations de définition IDi reçues. Enfin, le terminal 101 transmet au terminal 104 le programme Pj issu du flux Fp de programmes correspondant à l'information de définition reçue IDj. Ainsi, dans le mesure où seul un programme, en l'occurrence le programme Pj, est transmis du terminal de réception 101 au terminal de visualisation, le débit requis est inférieur à celui qui est requis par les systèmes de l'art antérieur si bien qu'il peut être transmis par un terminal mobile 101 sur une longue période sans pour cela consommer exagérément les ressources énergétiques de ce terminal 101.

Le terminal mobile de réception 101 représenté à la Fig. 2 comporte un récepteur 201 de flux de programmes, une unité d'extraction d'informations de définition de programmes 202, une unité d'extraction 203 d'un programmes à partir d'un flux de programmes, une unité d'émission/réception de données numériques 204 et une unité de contrôle 205 qui contrôle le fonctionnement des différentes unités du terminal 101.

Le fonctionnement du terminal 101 est maintenant donné en relation avec sa structure de la Fig. 2. L'unité de réception 201 reçoit en continu un flux Fp d'au moins un programme Pi (mais en général plusieurs), par exemple du type DVB-H. L'unité d'extraction 202 extrait l'information de définition IDi du ou de chacun des programmes Pi du flux Fp reçu. L'unité d'émission/réception 204 transmet l'information de définition IDi de chacun des programmes Pi du flux Fp reçu par le terminal de visualisation 104 via un canal de transmission 206 du bus 103. Le terminal de visualisation 102 répond par une information de définition IDj, qui identifie le programme Pj sélectionné par l'utilisateur au moyen d'un terminal de visualisation 104, parmi les programmes Pi du flux Fp.

Lorsque l'unité de réception 204 reçoit cette réponse, elle soumet l'information de définition IDj à l'unité d'extraction 203 qui extrait le programme Pj du flux Fp reçu en continu et transmet ce programme Pⱼ au terminal de visualisation 102 au travers de l'unité d'envoi 204 et du canal 206 du bus 103.

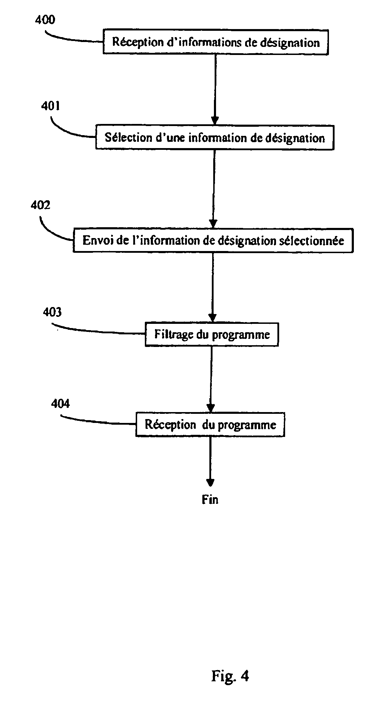

Le terminal de visualisation 104 représenté à la Fig. 3 comporte une unité d'émission/réception de données numériques 301, une unité de préparation de données numériques 302, un écran de visualisation 303, une unité de restitution sonore 304, une unité d'interaction 305, par exemple un clavier alphanumérique, pour la mise en oeuvre du procédé de réception de programmes de télévision représenté à la Fig. 4, et une unité de contrôle 306 qui contrôle le fonctionnement des différentes unités du terminal 104.

L'unité de réception 301 reçoit au moins une information de définition IDi émise par le terminal mobile 101 au travers du canal 206 du bus 103. Ces informations de définition IDi sont soumises à l'unité 302 qui prépare et commande l'affichage de ces informations de définition sur l'écran 303 de manière à être lisibles par l'utilisateur. L'utilisateur peut alors naviguer parmi la représentation visuelle de chacun des programmes du flux Fp reçu par le terminal de réception 101 et peut choisir un de ces programmes au moyen de l'unité d'interaction 305. L'information de définition IDj du programme Pj choisi est ensuite envoyée au terminal de réception 101 par l'intermédiaire de l'unité d'envoi 301 et du canal 206. L'unité de réception 301 reçoit, via le canal 206, le programme Pj choisi. Les données audio visuelles de ce programme Pj sont soumises à l'unité de préparation 302 qui prépare les données audio visuelles en vue d'être utilisées (décodage, synchronisation des données audio et vidéo, redimensionnement éventuel de la partie vidéo, etc.). Les données vidéo préparées sont visualisées sur l'écran 303 et les données audio préparées sont soumises à l'unité de restitution sonore 304. Les données numériques interactives, si elles sont présentes dans le programme Pj, sont soumises à l'unité de préparation 302 qui prépare ces données en vue d'être utilisées par l'unité d'interaction 305. L'utilisateur peut alors interagir avec ces données au travers de l'unité d'émission/réception de données numériques 301.

La Fig. 4 est un diagramme représentant les étapes successives du procédé de réception selon la présente invention. A l'étape 400, l'information de définition IDi d'au moins un programme Pi issu d'un flux de programmes Fp est reçue par le terminal 104. Ces informations de définition IDi sont envoyées par le terminal de réception 101 de la Fig. 1. L'utilisateur peut alors choisir un des programmes Pj du flux de programmes Fp en sélectionnant l'information de définition IDj de ce programme (étape 401). A l'étape 402, cette information de définition IDj est envoyée au terminal de réception 101. A l'étape 403, le terminal de réception extrait à partir du flux de programmes Fp un programme comprenant des données audio visuelles et, éventuellement les données numériques interactives correspondantes à l'information de définition IDj reçue. Cette étape d'extraction est définie, par exemple, selon les standards ISO CEI 13818-1:2000, ETSI EN 301 192 et ETSI EN 300 468. Le programme ainsi défini comporte beaucoup moins de données à transmettre que le flux Fp complet. Ainsi, ce programme peut être transmis par un terminal mobile sur une longue période sans pour cela consommer exagérément les ressources énergétiques de ce terminal. A l'étape 404, le terminal 104 reçoit le programme défini envoyé par le terminal de réception 101.

De plus ledit terminal portable de réception peut utiliser les ressources énergétiques dudit terminal de visualisation comme par exemple un téléphone portable se chargeant via la liaison USB d'un ordinateur portable.

## Revendications

1. Procédé de réception d'un programme d'un flux numérique contenant un ou plusieurs programmes de télévision, ledit flux étant reçu par un terminal de réception mobile 101 et de visualisation d'un programme dudit flux au moyen d'un terminal de visualisation 104, ledit procédé consistant à recevoir, côté terminal de réception 101, ledit flux de programme, extraire la ou les informations de définition du ou desdits programmes de télévision reçus et contenus dans ledit flux, extraire un programme défini à partir d'une information de définition sélectionnée, et transmettre, audit terminal de visualisation 104 à partir dudit terminal de réception 101 ledit programme défini pour visualisation par ledit terminal de visualisation 104,**caractérisé en ce que** le programme défini à partir de l'information de définition sélectionnée est extrait et transmis au terminal de visualisation 104 sans que ce programme ne soit mémorisé par le terminal de réception 101.

2. Procédé de réception selon la revendication 1, dans lequel l'information de définition est sélectionnée au niveau dudit terminal de visualisation 104 et transmise au terminal de réception 101.

3. Procédé de réception selon la revendication 1 ou 2, dans lequel le flux est défini selon le standard DVB.

4. Système de réception d'un programme d'un flux numérique contenant un ou plusieurs programmes de télévision, ledit système comportant un terminal de réception 101 mobile comportant des moyens pour recevoir le flux de programmes, pour extraire du flux la ou les informations de définition du ou des programmes de télévision, pour extraire un programme défini à partir d'une information de définition sélectionnée et pour transmettre ledit programme à un terminal de visualisation 104 d'un programme, **caractérisé en ce que** le programme défini à partir de l'information de définition sélectionnée est extrait et transmis au terminal de visualisation 104 sans que ce programme ne soit mémorisé par le terminal de réception 101.

5. Système de réception d'un programme selon la revendication 4, dans lequel ledit terminal de réception 101 comporte :
- des moyens pour transmettre la ou lesdites informations de définition au terminal de visualisation 104,
et en ce que le terminal de visualisation 104 comporte :
- des moyens pour recevoir au moins une information de définition,
- des moyens pour sélectionner une information de définition parmi la ou lesdites informations de définition reçues à partir du terminal de réception 101,et
- des moyens pour transmettre ladite information de définition sélectionnée au terminal de réception 101.

6. Terminal de réception 101 d'un système de réception d'un programme d'un flux numérique contenant un ou plusieurs programmes de télévision, ledit terminal comportant des moyens pour recevoir ledit flux de programmes, pour extraire dudit flux la ou les informations de définition du ou desdits programmes de télévision, pour extraire un programme défini à partir d'une information de définition sélectionnée et pour transmettre ledit programme à un terminal de visualisation 104 d'un programme, **caractérisé en ce que** le programme défini à partir de l'information de définition sélectionnée est extrait et transmis sans que ce programme ne soit mémorisé par ledit terminal de réception 101.

7. Terminal de réception 101 selon la revendication 6
qui comporte des moyens pour transmettre la ou lesdites informations de définition à un terminal de visualisation 104 du système.

## Claims

1. Process for the reception of a programme from a digital stream containing one or more television programmes, the said stream being received by a mobile receiving terminal 101 and viewing a programme from said stream by means of a viewing terminal 104, the said process consisting of receiving the said programme stream at the receiving terminal 101, extracting the defining data item or items of the said television programme(s) received and contained in said stream, extracting a programme defined on the basis of a selected defining data item, and transmitting the said defined programme to said display terminal 104 from said receiving terminal 101, for viewing on said display terminal 104, **characterised in that** the programme defined on the basis of the selected defining data item is extracted and transmitted to the viewing terminal 104 without this programme being stored by the receiving terminal 101.

2. Reception process according to claim 1, wherein the defining data item is selected at said viewing terminal 104 and transmitted to the receiving terminal 101.

3. Reception process according to claim 1 or 2, wherein the stream is defined according to the DVB standard.

4. System for the reception of a programme from a digital stream containing one or more television programmes, the said system comprising a mobile receiving terminal 101 comprising means for receiving the stream of programmes, for extracting from said stream the data item or items for defining the said television programme(s), for extracting a programme defined on the basis of a selected defining data item, and for transmitting said programme to a terminal 104 for viewing a programme, **characterised in that** the programme defined on the basis of the selected defining data item is extracted and transmitted to the viewing terminal 104 without this programme being stored by the receiving terminal 101.

5. System for the reception of a programme according to claim 4, wherein the said receiving terminal 101 comprises:
- means for transmitting the said defining data item or items to the viewing terminal 104,
and in that the viewing terminal 104 comprises:
- means for receiving at least one defining data item,
- means for selecting one defining data item from among the defining data item or items received from the receiving terminal 101, and
- means for transmitting said selected defining data item to the receiving terminal 101.

6. Receiving terminal 101 of a system for the reception of a programme from a digital stream containing one or more television programmes, the said terminal comprising means for receiving the stream of programmes, for extracting from said stream the defining data item or items of the said television programme(s), for extracting a programme defined on the basis of a selected defining data item, and for transmitting said programme to a viewing terminal 104 for a programme, **characterised in that** the programme defined on the basis of the selected defining data item is extracted and transmitted without this programme being stored by the receiving terminal 101.

7. Receiving terminal 101 according to claim 6, which comprises means for transmitting said defining data item or items to a viewing terminal 104 of the system.

## Patentansprüche

1. Verfahren zum Empfangen eines Programms aus einem digitalen Datenstrom, der ein oder mehrere Fernsehprogramme enthält, wobei der Datenstrom von einem mobilen Empfangsterminal (101) empfangen wird, und zum Anzeigen eines Programms des Datenstroms mittels eines Anzeigeterminals (104), wobei das Verfahren aus den folgenden Schritten besteht:
- Empfangen des Programmdatenstroms durch das Empfangsterminal (101),
- Extrahieren der Definitionsinformation(en) des oder der Fernsehprogramms/e, die empfangen werden und im Datenstrom enthalten sind,
- Extrahieren eines mittels einer ausgewählten Definitionsinformation bestimmten Programms, und
- Senden des bestimmten Programms von dem Empfangsterminal (101) an das Anzeigeterminal (104) zum Anzeigen,
**dadurch gekennzeichnet, dass**
das mittels der ausgewählten Definitionsinformation bestimmte Programm extrahiert und an das Anzeigeterminal (104) gesendet wird, ohne dass das Programm von dem Empfangsterminal (101) gespeichert wird.

2. Empfangsverfahren gemäß Anspruch 1,
bei dem die Definitionsinformation am Anzeigeterminal (104) ausgewählt und an das Empfangsterminal (101) gesendet wird.

3. Empfangsverfahren gemäß Anspruch 1 oder 2,
bei dem der Datenstrom gemäß dem DVB-Standard definiert ist.

4. System zum Empfangen eines Programms aus einem digitalen Datenstrom, der ein oder mehrere Fernsehprogramme enthält, wobei das System zum Extrahieren der Definitionsinformation(en) des oder der Fernsehprogramms/e aus dem Datenstrom, zum Extrahieren eines mittels einer ausgewählten Definitionsinformation bestimmten Programms und zum Senden dieses Programms an ein Terminal (104) zur Anzeige eines Programms ein mobiles Empfangsterminal (101) aufweist und das mobile Empfangsterminal (101) Mittel zum Empfangen des Programm-Datenstroms umfasst,
**dadurch gekennzeichnet, dass**
das mittels der ausgewählten Definitionsinformation bestimmte Programm extrahiert und an das Anzeigeterminal (104) gesendet wird, ohne dass das Programm von dem Empfangsterminal (101) gespeichert wird.

5. System zum Empfang eines Programms gemäß Anspruch 4, wobei das Empfangsterminal (101) Mittel zum Senden der Definitionsinformation(en) an das Anzeigeterminal (104) aufweist, und
das Anzeigeterminal (104) aufweist:
- Mittel zum Empfangen mindestens einer Definitionsinformation,
- Mittel zum Auswählen einer Definitionsinformation aus den vom Empfangsterminal (101) empfangenen Definitionsinformation(en), und
- Mittel zum Senden der ausgewählten Definitionsinformation an das Empfangsterminal (101).

6. Empfangsterminal (101) eines Systems zum Empfangen eines Programm aus einem digitalen Datenstrom, der ein oder mehrere Fernsehprogramme enthält, wobei das Terminal Mittel zum Empfangen des Programm-Datenstroms, zum Extrahieren der Definitionsinformation(en) des oder der Fernsehprogramms/e aus dem Datenstrom, zum Extrahieren eines mittels einer ausgewählten Definitionsinformation bestimmten Programms und zum Senden dieses Programms an ein Terminal (104) zum Anzeigen eines Programms aufweist,
**dadurch gekennzeichnet, dass**
das mittels der ausgewählten Definitionsinformation bestimmte Programm extrahiert und gesendet wird, ohne dass das Programm von dem Empfangsterminal (101) gespeichert wird.

7. Empfangsterminal (101) gemäß Anspruch 6,
aufweisend Mittel zum Senden der Definitionsinformation(en) an ein Anzeigeterminal (104) des Systems.
